# EUROPEAN PATENT SPECIFICATION

(11) **EP 1 568 927 B1**
(45) Date of publication and mention of the grant of the patent: **23.08.2006**
(21) Application number: 03770068.9
(22) Date of filing: 31.10.2003
(51) Int. Cl.: F16K 27/00

(54) **FLUID CONTROL DEVICE**
VORRICHTUNG FÜR FLUIDSTEUERUNG
DISPOSITIF REGULATEUR DE FLUIDE

(30) Priority: 02.12.2002 JP 2002349850
(43) Date of publication of application: 31.08.2005
(73) Proprietor: FUJIKIN INCORPORATED, Osaka-shi, Osaka-fu 550-0012 (JP)
(72) Inventor: MOCHIZUKI, Yasunori FUJIKIN INCORPORATED, Osaka-shi, Osaka 550-0012 (JP); MAKINO, Megumu FUJIKIN INCORPORATED, Osaka-shi, Osaka 550-0012 (JP); KOYOMOGI, Mutsunori FUJIKIN INCORPORATED, Osaka-shi, Osaka 550-0012 (JP)
(74) Representative: Paul, Dieter-Alfred
(86) International application number: PCT/JP2003/013978
(87) International publication number: WO 2004/051125

(56) References cited:
- JP-A- 2001 153 289
- JP-A- 2001 254 857
- JP-A- 2001 521 120
- JP-A- 2002 517 697
- JP-A- 2002 520 554
- JP-A- 2003 091 322

## Description

### TECHNICAL FIELD

The present invention relates to fluid control devices, for example, for use in semiconductor processing apparatus for the purpose of selectively supplying different kinds of material gases to a processing chamber upon a changeover.

### BACKGROUND ART

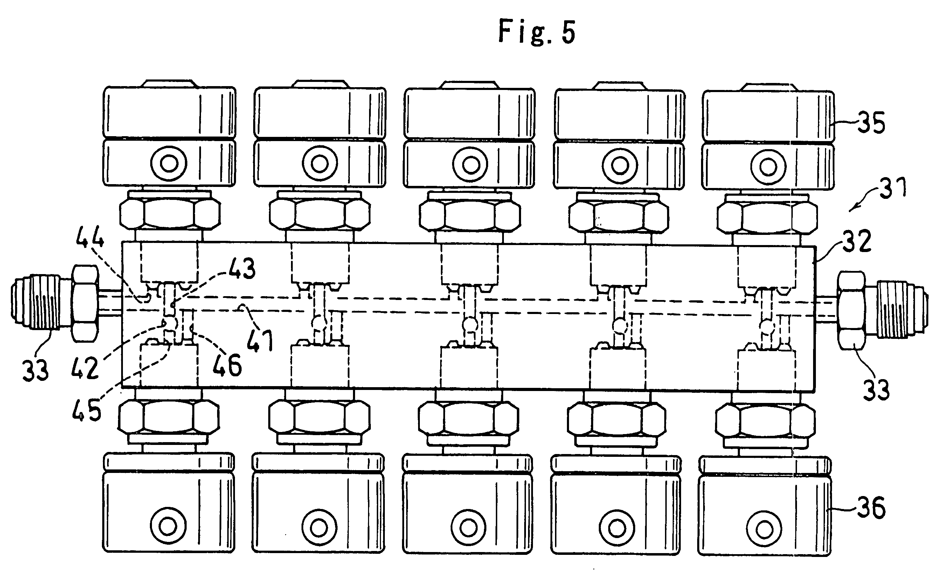

FIG. 5 shows a known fluid control device 31 for use in selectively supplying different kinds of material gases to a processing chamber upon a changeover. The device 31 comprises a rectangular parallelepipedal body 32, two main gas inlet-outlet members 33 arranged respectively at lengthwise opposite ends of the body 32, two vent gas inlet-outlet members (not shown) similarly arranged and each spaced apart from the corresponding member 33 widthwise of the body 32, a main gas channel 41 for holding the main gas inlet-outlet members 33 in communication with each other, a vent gas channel (not shown) for holding the vent gas inlet-outlet members in communication with each other, a plurality of subgas inlets 42 arranged at one side of the body 32 at a spacing, shut-off valves 35, 36 arranged in pairs corresponding to the respective subgas inlets 42 in position and arranged generally in two rows, first subgas inflow channels 43 extending from the respective subgas inlets 42 to inlet ports of the respective shut-off valves 35 in the first of the rows, main channel communication passageways 44 extending from outlet ports of the respective shut-off valves 35 in the first row to the main gas channel 41, second subgas inflow channels 45 extending from the respective subgas inlets 42 to inlet ports of the respective shut-off valves 36 in the second of the rows, and vent channel communication passageways 46 extending from outlet ports of the respective shut-off valves 36 in the second row to the vent gas channel 43.

The publication of JP-A No. 10-205636 discloses that a shut-off valve having a flanged body is removably mounted on two channel blocks with screw members extending through the flange. The same publication discloses the combination of a block having a V-shaped channel and two shut-off valves having 2 ports and 3 ports respectively to provide a gas channel.

If the fluid control device described and illustrated malfunctions at one portion thereof, the device needs to be replaced in its entirety. The device must therefore be improved with respect to the ease of repair. Furthermore, the device has problems in that it must be adapted for a changeover from one gas to another instantaneously with good stability without involving pressure variations and needs to be diminished in dead space. The device can be made easy to repair when each shut-off valve is removably mounted with use of screws as disclosed in the publication of JP-A No. 10-205636, whereas even if the device is merely so made, the other problems still remain to be solved. The gas channel provided by the combination of a V-shaped channel and a three-port valve has many angular portions and a reduced cross section and is accordingly increased in pressure loss, hence the problem that the channel is unable to pass a fluid therethrough, for example, at a great flow rate in excess of about 100 liters/min.

In view of the above situation, an object of the present invention is to provide a fluid control device which is made easier to repair, adapted for an instantaneous changeover from one gas to another with good stability and without entailing pressure variations, diminished in dead space and capable of passing a fluid therethrough at a great flow rate.

### DISCLOSURE OF THE INVENTION

The present invention provides a fluid control device comprising a rectangular parallelepipedal body, two main gas inlet-outlet openings arranged respectively at lengthwise opposite ends of the body, two vent gas inlet-outlet openings similarly arranged and each spaced apart from the corresponding main gas inlet-outlet opening widthwise of the body, a main gas channel for causing the main gas inlet-outlet openings to communicate with each other therethrough, a vent gas channel for causing the vent gas inlet-outlet openings to communicate with each other therethrough, a plurality of subgas inlets arranged at one side of the body at a spacing, shut-off valves arranged in pairs corresponding to the respective subgas inlets in position and arranged generally in two rows, first subgas inflow channels extending from the respective subgas inlets to inlet ports of the respective shut-off valves in the first of the rows, main channel communication passageways extending from outlet ports of the respective shut-off valves in the first row to the main gas channel, second subgas inflow channels extending from the respective subgas inlets to inlet ports of the respective shut-off valves in the second of the rows, and vent channel communication passageways extending from outlet ports of the respective shut-off valves in the second row to the vent gas channel, different kinds of material gases to be admitted from the respective subgas inlets being feedable to a processing chamber positioned downstream from the device from an outlet of the main gas channel upon a suitable changeover, a gas inside the body being dischargeable through the vent gas channel, the fluid control device being characterized in that the body comprises a center channel block and two side channel blocks arranged on the widthwise opposite sides of the center channel block, each of the shut-off valves being removably mounted on both the center channel block and one of the side channel blocks with the inlet port thereof positioned for the center channel block and with the outlet port thereof positioned for the side channel block, the center channel block having Y-shaped channels identical in number with the number of the subgas inlets and each comprising one common channel and two branched channels arranged in a Y shape when seen from a lengthwise direction of the center channel block, the common channel of the Y-shaped channel having an opening serving as the subgas inlet and the branched channels of the Y-shaped channel communicating with the inlet ports of the corresponding pair of shut-off valves to thereby provide the first and second subgas inflow channels, the main gas channel and the main channel communication passageways being formed in one of the side channel blocks, the vent gas channel and the vent channel communication passageways being formed on the other side channel block.

Each of the side channel blocks comprises, for example, a block having a see-through channel serving as the main gas channel. The center channel block comprises, for example, a plurality of blocks each having one Y-shaped channel. Each side channel block may be made by connecting a plurality of blocks having a T-shaped channel. The center channel block may be in the form of one block.

With the fluid control device of the invention, each of the shut-off valves is removably mounted on both two channel blocks, so that in the event of one of the shut-off valves malfunctioning, the faulty valve only is replaceable to ensure ease of repair. Since the material gas is supplied to the gas channel of the side channel block through the Y-shaped channel in the center channel block, the length of the channel for a gas flowing from the subgas inlet to the main gas channel is equal to the length of the channel for a gas flowing from the subgas inlet to the vent gas channel. This suppresses the pressure difference to be produced between the main gas and the vent gas to result in reduced pressure variations. Because the device body comprises three channel blocks, the channels in the channel blocks can be given a simplified structure, consequently making the device body easier and less costly to fabricate and further diminishing the dead space to the greatest possible extent. The main gas channel and the vent gas channel can be made easily free of V-shaped or like angular portions. Accordingly, the device is usable, for example, as an MOCVD gas supply device for passing gases therethrough at a great flow rate.

### BRIEF DESCRIPTION OF THE DRAWINGS

FIG. 1 is a side elevation showing an embodiment of fluid control device of the invention.
FIG. 2 is a front view of the same.
FIG. 3 is a view in section taken along the line III-III in FIG. 1.
FIG. 4 is a flow diagram of the fluid control device of the invention.
FIG. 5 is a side elevation showing a conventional fluid control device.

### BEST MODE OF CARRYING OUT THE INVENTION

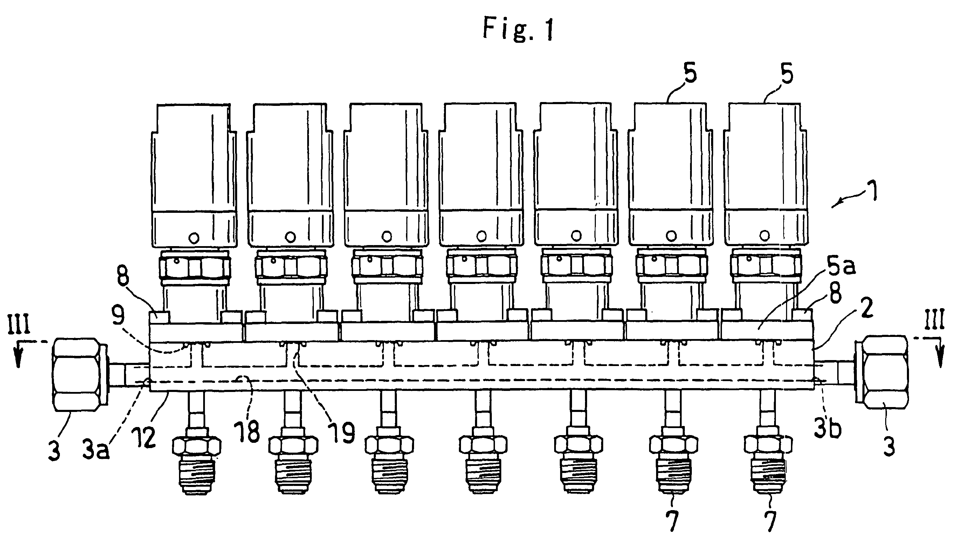

An embodiment of the invention will be described below with reference to the drawings. In the following description, the term "front" refers to the right-hand side of FIG. 1, and the term "rear" to the left-hand side of FIG. 1. The terms "left" and "right" are used for the device as it is seen from the front rearward. The terms "upper" and "lower" refer respectively to the upper and lower sides of FIG. 1.

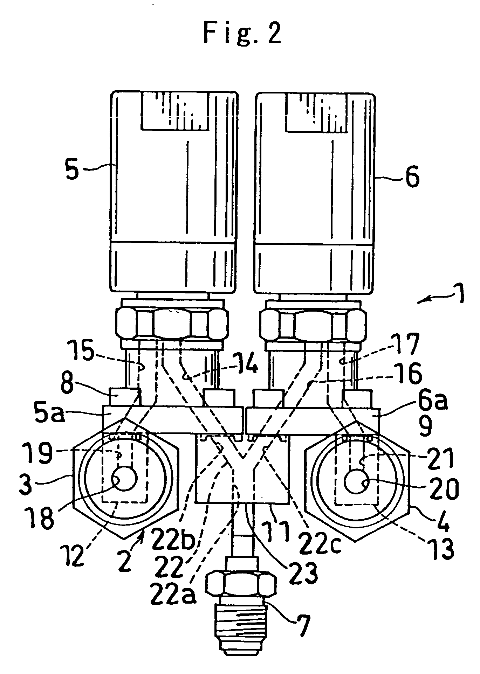

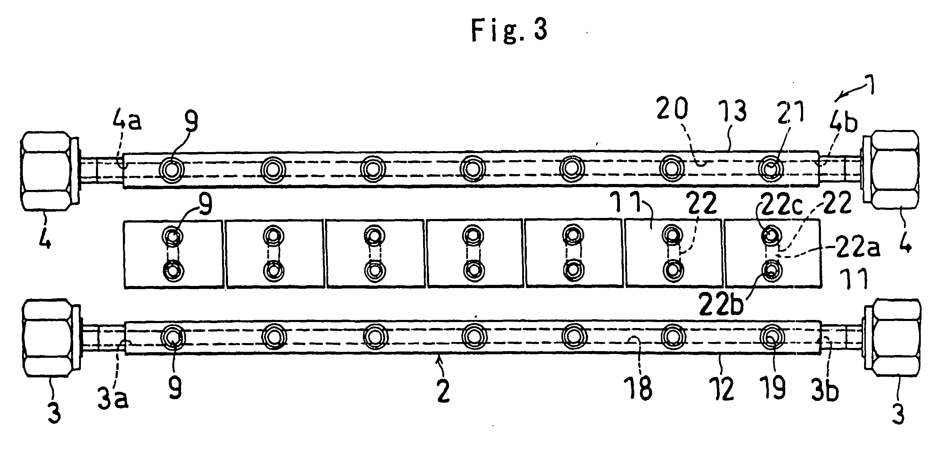

FIGS. 1 to 4 show an embodiment of fluid control device of the invention.

The fluid control device 1 of this embodiment is used, for example, for supplying different kinds of gases selectively upon a changeover for use in the MOCVD process. The device comprises a body 2, left-row inlet-outlet couplings 3 and right-row inlet-outlet couplings 4 provided at the front and rear ends of the body, left-row shut-off valves 5 and right-row shut-off valves 6 arranged in left and right two rows on the top of the body 2, the shut-off valves in each row being seven in number, and seven material gas admitting couplings 7 arranged at the bottom of the body 2.

The body 2 comprises a center channel block 11, a left side channel block 12 disposed in parallel to and on the left side of the center channel block 11 and spaced apart therefrom by a predetermined distance, and a right side channel block 13 disposed in parallel to and on the right side of the center channel block 11 and spaced apart therefrom by a predetermined distance, the center block 11 having a larger width than the other two channel blocks 12, 13. According to the present embodiment, each of the side channel blocks 12, 13 comprises a channel block which is elongated in the forward or rearward direction, and the center channel block 11 comprises an assembly of seven channel blocks (indicated at 11).

The left-row inlet-outlet couplings 3 are attached respectively to the front and rear ends of the left side channel block 12, and the right-row inlet-outlet couplings 4 are attached respectively to the front and rear ends of the right side channel block 13. The material gas admitting couplings 7 are attached to the bottoms of the respective center channel blocks 11.

Each of the left-row shut-off valves 5 is mounted on both the top of the left side channel block 12 and the top of left half of each center channel block 11. Each of the right-row shut-off valves 6 is mounted on both the top of the right side channel block 13 and the top of right half of each center channel block 11. Each of the shut-off valves 5, 6 has at its lower end a square to rectangular flange 5a (6a), and the four corners of the flange 5a (6a) are removably fastened to the corresponding channel blocks 11, and 12 or 13 with screw members 8 inserted therethrough from above.

Each pair of butted portions of the shut-off valve 5 or 6 and the channel blocks 11, and 12 or 13 are provided with a seal 9 for fluid-tightly holding the corresponding opposed pair of channels 14, 15, 16 or 17 and 19, 21 or 22 in communication.

The shut-off valve 5 in the left row has an inlet channel 14 having a lower-end opening and an outlet channel 15 having a lower-end opening. An inlet port for the inlet channel 14 is fixedly provided in the center channel block 11, and an outlet port of the outlet channel 15 in the left side channel block 12. The shut-off valve 6 in the right row has an inlet channel 16 having a lower-end opening and an outlet channel 17 having a lower-end opening. An inlet port for the inlet channel 16 is fixedly provided in the center channel block 11, and an outlet port of the outlet channel 17 in the right side channel block 13. The inlet port and the outlet port of the left-row shut-off valve 5 and the inlet port and the outlet port of the right-row shut-off valve 6 are arranged side by side in the left-to-right direction at the same position with respect to the lengthwise direction of the device body 2.

The left side channel block 12 is provided with a main gas channel 18 extending straight therethrough in the front-rear direction, and seven main channel communication passageways 19 upwardly branching off from the main gas channel 18 and communicating with the outlet ports of outlet channels 15 of the respective left-row shut-off valves 5. The right side channel block 13 is provided with a vent gas channel 20 extending straight therethrough in the front-rear direction, and seven vent channel communication passageways 21 upwardly branching off from the vent gas channel 20 and communicating with the outlet ports of outlet channels 17 of the respective right-row shut-off valves 6. According to the present embodiment, each gas channel has an inlet at the rear end of the block, and an outlet at the front end thereof. The inlet of the main gas channel 18 is indicated at 3a, the outlet thereof at 3b, the inlet of the vent gas channel 20 at 4a, and the outlet thereof at 4b.

Each center channel block 11 is provided with a Y-shaped channel 22 positioned in corresponding relation with ports of the pair of shut-off valves 5, 6 and comprising a common channel 22a and branched left and right channels 22b, 22c which are arranged in a Y-shape when seen from the lengthwise direction of the block 11. The common channel 22a of the Y-shaped channel 22 extends downward from the approximate center of the block 11 with respect to the height and width thereof and has an opening in the bottom surface of the block 11. This opening serves as a subgas inlet 23. The material gas admitting coupling 7 is mounted in this subgas inlet 23. The branched left channel 22b of the Y-shaped channel 22 extends obliquely leftwardly upward from the upper end of the common channel 22a and communicates with the inlet port of inlet channel 14 of the left-row shut-off valve 5, and the branched right channel 22c extends obliquely rightwardly upward from the upper end of the common channel 22a and communicates with the inlet port of inlet channel 16 of the right-row shut-off valve 6. Thus, the common channel 22a and the left channel 22b of the Y-shaped channel 22 provide a first subgas inflow channel 22a, 22b extending from the subgas inlet 23 to the inlet port of inlet channel 14 of the left-row shut-off valve 5, and the common channel 22a and the right channel 22c of the Y-shaped channel 22 provide a second subgas inflow channel 22a, 22c extending from the subgas inlet 23 to the inlet port of inlet channel 16 of the right-row shut-off valve 6.

Y-shaped channel 22 of the center channel block 11 can be obtained, for example, by forming two branched channels 22b, 22c first and thereafter making a common channel 22a. Each of the side channel blocks 12, 13 can be obtained, for example, by forming communication passageways first and thereafter forming a straight channel. In this way, each of the blocks 11, 12, 13 can be made easily without creating any dead space.

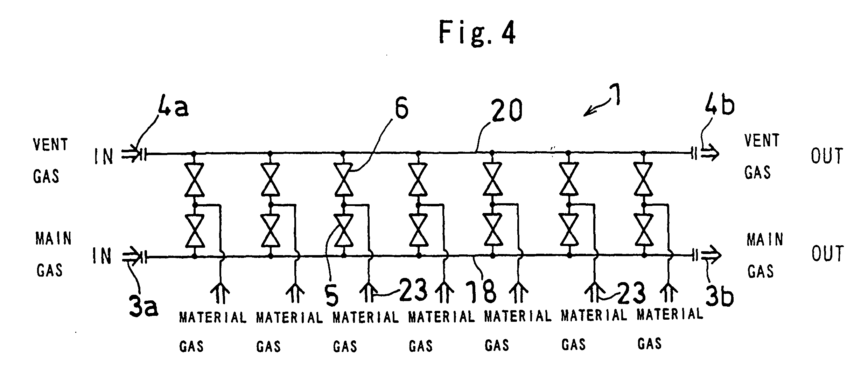

With the fluid control device 1, different kinds of material gases to be admitted from the respective subgas inlets 23 can be fed to a processing chamber disposed subsequent to the device through the outlet 3b of the main gas channel 18 upon a suitable changeover, and the gas inside the device body can be discharged from the outlet 4b of the vent gas channel 20 as shown in FIG. 4. As will be apparent from FIGS. 1 to 3, the left and right portions of the fluid control device are symmetrical, and each of the inlet-outlet openings 3a, 3b, 4a, 4b can be used as any of the main gas inlet, main gas outlet, vent gas inlet and vent outlet.

One gas is changed over to another gas by the fluid control device 1 in the following manner. First one of the left-row shut-off valves 5 is opened which is positioned in corresponding relation with the material gas admitting coupling 7 to which a pipe for the gas to be admitted as a first material gas is joined, and the other left-row shut-off valves 5 are closed, whereby the first material gas is admitted into the main gas channel 18 and sent out of the main gas outlet 3b to the processing chamber along with the main gas. At the same time, a vent gas is admitted into the vent gas channel 20 and discharged from the vent gas outlet 4b. The main gas channel 18 and the vent gas channel 20 are each in the form of a straight channel and are therefore capable of passing gases therethrough at a great flow rate. Subsequently, another left-row shut-off valve 5 is opened which is positioned in corresponding relation with the material gas admitting coupling 7 to which a pipe for the gas to be admitted as a second material gas is joined, and the other left-row shut-off valves 5 are closed, whereby the first material gas is changed over to the second material gas. Since the first subgas inflow channel 22a, 22b for passing the material gas to the main gas channel 18 at this time is symmetrical to the second subgas inflow channel 22a, 22c for passing the material gas to the subgas gas channel 20 at this time, the first material gas can be changed over to the second instantaneously with good stability with pressure variations suppressed. In this way, up to seven kinds of material gases can be selectively supplied to the main gas channel 18.

Although the fluid control device 1 described above has seven subgas inlets 23, the device can be adapted to have any number of subgas inlets other than seven. It is also possible to connect two devices each having seven subgas inlets at the inlet-outlet coupling portions 3, 4 for use as a device having 14 subgas inlets.

### INDUSTRIAL APPLICABILITY

The fluid control device of the invention is made easier to repair, adapted for an instantaneous changeover from one gas to another with good stability and without entailing pressure variations, and is therefore suitable, for example, for use in semiconductor processing apparatus for the purpose of supplying different kinds of material gases to a processing chamber upon a suitable changeover.

## Claims

1. A fluid control device comprising a rectangular parallelepipedal body (2), two main gas inlet-outlet openings (3) arranged respectively at lengthwise opposite ends of the body, two vent gas inlet-outlet openings (4) similarly arranged and each spaced apart from the corresponding main gas inlet-outlet opening widthwise of the body, a main gas channel (18) for causing the main gas inlet-outlet openings (3) to communicate with each other therethrough, a vent gas channel (20) for causing the vent gas inlet-outlet openings (4) to communicate with each other therethrough, a plurality of subgas inlets (23) arranged at one side of the body at a spacing, shut-off valves (5, 6) arranged in pairs corresponding to the respective subgas inlets in position and arranged generally in two rows, first subgas inflow channels (22a, 22b) extending from the respective subgas inlets (23) to inlet ports of the respective shut-off valves (5) in the first of the rows, main channel communication passageways (19) extending from outlet ports of the respective shut-off valves in the first row to the main gas channel (18), second subgas inflow channels (22a, 22c) extending from the respective subgas inlets (23) to inlet ports of the respective shut-off valves (6) in the second of the rows, and vent channel communication passageways (21) extending from outlet ports of the respective shut-off valves in the second row to the vent gas channel (20), different kinds of material gases to be admitted from the respective subgas inlets being feedable to a processing chamber positioned downstream from the device from an outlet of the main gas channel upon a suitable changeover, a gas inside the body being dischargeable through the vent gas channel, the fluid control device being **characterized in that** the body (2) comprises a center channel block (11) and two side channel blocks (12, 13) arranged on the widthwise opposite sides of the center channel block, each of the shut-off valves (5, 6) being removably mounted on both the center channel block and one of the side channel blocks with the inlet port thereof positioned for the center channel block and with the outlet port thereof positioned for the side channel block, the center channel block having Y-shaped channels (22) identical in number with the number of the subgas inlets and each comprising one common channel (22a) and two branched channels (22b, 22c) arranged in a Y shape when seen from the lengthwise direction of the center channel block, the common channel (22a) of the Y-shaped channel having an opening serving as the subgas inlet (23) and the branched channels (22b, 22c) of the Y-shaped channel communicating with the inlet ports of the corresponding pair of shut-off valves (5,6) to thereby provide the first and second subgas inflow channels, the main gas channel (18) and the main channel communication passageways (19) being formed in one of the side channel blocks, the vent gas channel (20) and the vent channel communication passageways (21) being formed on the other side channel block.

## Patentansprüche

1. Fluidsteuereinrichtung mit einem rechteckigen parallelepipedalen Körper (2), zwei Hauptgas-Einlass/Auslass-Öffnungen (3), die jeweils an der Länge nach gegenüberliegenden Enden des Körpers angeordnet sind, zwei Lüftungsgas-Einlass/Auslass-Öffnungen (4), die ähnlich angeordnet und jeweils von den entsprechenden Hauptgas-Einlass/Auslass-Öffnungen der Breite des Körpers nach beabstandet sind, einem Hauptgaskanal (18), der dafür ausgelegt ist, dass die Hauptgas-Einlass/Auslass-Öffnungen (3) durch ihn miteinander kommunizieren, einem Lüftungsgaskanal (20), der dafür ausgelegt ist, dass die Lüftungsgas-Einlass/Auslass-Öffnungen (4) miteinander durch ihn kommunizieren, einer Vielzahl von Nebengas-Einlässen (23), die auf einer Seite des Körpers beabstandet angeordnet sind, Absperrventilen (5, 6), die in Paaren angeordnet sind, wobei sie mit den jeweiligen Nebengas-Einlässen in Position korrespondieren und jeweils allgemein in zwei Reihen angeordnet sind, ersten Nebengas-Einströmkanälen (22a, 22b), die sich von den jeweiligen Nebengas-Einlässen (23) zu den Einlässen der jeweiligen Absperrventile (5) in der ersten der Reihen erstrecken, Hauptkanal-Kommunikationsdurchgängen (19), die sich von den Auslässen der jeweiligen Absperrventile in der ersten Reihe zu dem Hauptgaskanal (18) erstrecken, zweiten Nebengas-Einströmkanälen (22a, 22c), die sich von den jeweiligen Nebengas-Einlässen (23) zu den Einlässen der jeweiligen Absperrventile (6) in der zweiten der Reihen erstrecken, und Belüftungskanal-Kommunikationsdurchgängen (21), die sich von den Auslässen der jeweiligen Absperrventile in der zweiten Reihe zu dem Lüftungsgaskanal (20) erstrecken, wobei verschiedene Arten von Materialgasen, die von den jeweiligen Nebengas-Einlässen eingelassen werden, zu einer Prozesskammer, welche stromabwärts von der Einrichtung positioniert ist von einem Auslass des Hauptgaskanals bei einer entsprechenden Umschaltung zuführbar ist, wobei ein Gas innerhalb des Körpers durch den Lüftungsgaskanal auslassbar ist, und wobei die Fluidsteuereinrichtung **dadurch gekennzeichnet ist, dass** der Körper (2) einen mittleren Kanalblock (11) und zwei seitliche Kanalblöcke (12, 13) aufweist, welche an der Länge nach gegenüberliegenden Seiten des mittleren Kanalblocks angeordnet sind, dass jedes der Absperrventile (5, 6) entfernbar an dem mittleren Kanalblock und an einem der seitlichen Kanalblöcke befestigt ist, wobei sein Einlass für den mittleren Kanalblock positioniert ist und sein Auslass für den seitlichen Kanalblock positioniert ist, und dass der mittlere Kanalblock Y-förmige Kanäle (22) aufweist, die in ihrer Anzahl identisch mit der Anzahl der Nebengas-Einlässe ist und die jeweils einen gemeinsamen Kanal (22a) und zwei verzweigte Kanäle (22b, 22c) aufweisen, die in einer Y-Form angeordnet sind, wenn sie von der Längsrichtung des mittleren Kanalblocks aus betrachtet werden, wobei der gemeinsame Kanal (22a) des Y-förmigen Kanals eine Öffnung aufweist, die als der Nebengas-Einlass (23) wirkt, und die verzweigten Kanäle (22b, 22c) des Y-förmigen Kanals mit den Einlässen des korrespondierenden Paars von Absperrventilen (5, 6) kommunizieren, um **dadurch** die ersten und zweiten Nebengas-Einströmkanäle bereitzustellen, und dass der Hauptgaskanal (18) und die Hauptkanal-Kommunikations-durchgänge (19) in einem der seitlichen Kanalblöcke ausgebildet sind und der Lüftungsgaskanal (2a) und die Lüftungskanal-Kommunikationsdurchgänge (21) an dem anderen seitlichen Kanalblock ausgebildet sind.

## Revendications

1. Dispositif régulateur de fluides comprenant un corps parallélépipédique rectangulaire (2), deux ouvertures principales d'entrée-sortie de gaz (3) arrangées respectivement aux extrémités opposées en longueur du corps, deux ouvertures d'entrée-sortie de gaz de ventilation (4) arrangés de manière similaire et chacune espacée à part de l'ouverture correspondante d'entrée-sortie de gaz principal en largeur du corps, un canal de gaz principal (18) pour causer aux ouvertures d'entrée-sortie de gaz principal (3) de communiquer l'une avec l'autre par celui, un canal de gaz de ventilation (20) pour causer aux ouvertures d'entrée-sortie de gaz de ventilation (4) de communiquer l'une avec l'autre par celui, une pluralité d'entrées de sous-gaz (23) arrangées à un côté du corps à une distance, les valves de fermeture (5, 6) arrangées en paires correspondant aux entrées de sous-gaz respectives en position et arrangées en général en deux rangées, les premiers canaux d'apport de sous-gaz (22a, 22b) s'étendant des entrées respectives de sous-gaz (23) aux ports d'entrée de la valve de fermeture respective (5) dans la première des rangées, les voies de passage de communication des canaux principaux (19) s'étendant des ports de sortie des valves de fermetures respectives dans la première rangée vers le canal de gaz principal (18), les secondes canaux d'apport de sous-gaz (22a, 22b) s'étendant des entrées de sous-gaz respectives (23) aux ports d'entrée des valves respectives de sous-gaz (6) dans la seconde des rangées, et les voies de passage de communication des canaux de ventilation (21) s'étendant des ports de sortie des valves de fermeture respectives dans la seconde rangée vers le canal de gaz de ventilation (20), différents types de gaz matériaux peuvent être admis des entrées respectives de sous-gaz, étant capable d'être alimentés à une chambre de traitement positionnée en aval de dispositif à partir d'une sortie du canal de gaz principal sur une commutation convenable, un gaz à l'intérieur du corps étant capable d'être déchargé par le canal de gaz de ventilation, le dispositif régulateur de fluide étant **caractérisé en ce que** le corps (2) comprend un bloc central de canaux (11) et deux blocs latéraux de canaux (12, 13) arrangés sur les côtés opposés en largeur du bloc central de canaux, chacune des valves de fermeture (5, 6) étant montée avec possibilité d'être éloignées sur tant le bloc central de canaux que l'un des blocs latéraux de canaux avec le port d'entrée de celle-ci positionné sur le bloc central de canaux et avec le port de sortie de celle-ci positionné sur le bloc latéral de canaux, le bloc central de canaux ayant les canaux en forme de Y (22) identiques en nombre avec le nombre d'entrées de sous-gaz et chacun comprenant un canal commun (22a) et deux canaux ramifiés (22b, 22c) arrangés dans une forme de Y quand vue de la direction en longueur du bloc central de canaux, le canal commun (22a) du canal en forme de Y ayant une ouverture servant comme l'entrée de sous-gaz (23) et les canaux ramifiés (22b, 22c) du canal en forme de Y communiquant avec les ports d'entrée des paires correspondantes des valves de fermeture (5, 6) pour pourvoir de cette manière les premier et second canaux d'apport de sous-gaz, le canal de gaz principal (18) et les voies de passage de communication des canaux principaux (19) étant formées sur l'un des blocs latéraux de canaux, le canal de gaz de ventilation (20) et les voies de passage de communication des canaux de ventilation (21) étant formées sur l'autre bloc latéral de canaux.
